Europäisches Patentamt

European Patent Office

Office européen des brevets

(19)

(11) Publication number: **0 147 874**
**B1**

(12) **EUROPEAN PATENT SPECIFICATION**

(45) Date of publication of patent specification: **16.12.87**

(51) Int. Cl.⁴: **C 08 L 71/04, C 08 L 77/00**

(21) Application number: **84201413.6**

(22) Date of filing: **04.10.84**

(54) **Polymer mixture comprising a polyphenylene ether and a polyamide.**

(30) Priority: **05.01.84 NL 8400038**

(43) Date of publication of application:
**10.07.85 Bulletin 85/28**

(45) Publication of the grant of the patent:
**16.12.87 Bulletin 87/51**

(84) Designated Contracting States:
**BE DE FR GB IT NL**

(56) References cited:
**EP-A-0 024 120**
**EP-A-0 046 040**

(73) Proprietor: **GENERAL ELECTRIC COMPANY**
**1 River Road**
**Schenectady New York 12305 (US)**

(72) Inventor: **van der Meer, Roelof**
**General Electric Plastics B.V. P.O. Box 117**
**NL-4600 AC Bergen op Zoom (NL)**

(74) Representative: **Grever, Frederik**
**General Electric Plastics B.V. P.O. Box 117**
**NL-4600 AC Bergen op Zoom (NL)**

Courier Press, Leamington Spa, England.

# 0 147 874

**Description**

The invention relates to a polymer mixture comprising a polyphenylene ether, a polyamide and a copolymer with units of a vinyl aromatic compound and of an unsaturated dicarboxylic acid.

Polymer mixtures comprising a polyphenylene ether and a polyamide are known from US—A—3 379 792. According to this prior art, noteworthy losses in physical properties occur in polymer mixtures comprising more than 20% by weight of polyamide.

Polymer mixtures which, in addition to a polyphenylene ether and a polyamide, comprise a further compound for improving the properties are disclosed in EP—A—0 024 120 and EP—A—0 046 040. According to EP—A—0 024 120 various types of compounds may be used as the further compound:

A) a liquid diene polymer

B) an epoxy compound or

C) a compound which in its molecule comprises both a) an ethylenically carbon-carbon double bond or a carbon-carbon triple bond and b) a carboxylic acid, acid anhydride, acid amide, imido, carboxylic acid ester, amino or hydroxyl group.

According to 0 046 040 as the further compound a copolymer is used with units of a vinyl aromatic compound and an alpha, beta — unsaturated dicarboxylic acid anhydride or a copolymer with units of a vinyl aromatic compound and an imide compound of an alpha, beta — unsaturated dicarboxylic acid. As appears from the examples of EP—A—0 046 040, the copolymer is usually used in a quantity of 8—35% by weight. As also appears from the examples of EP—A—0 046 040, the copolymer used comprises usually not more than 14 mol% of the alpha, beta — unsaturated dicarboxylic acid derivative.

The polymer mixtures according to EP—A—0 046 040 can readily withstand oils, can readily withstand heat, and have a good impact strength.

Quite unexpectedly it has been found that, by using certain copolymers, polymer mixtures can be obtained which can better withstand heat than the polymer mixtures according to EP—A—0 046 040. Articles formed from the polymer mixtures according to the invention maintain their shape at higher temperatures better than articles formed from the polymer mixtures according to EP—A—0 046 040. The copolymers are used in the polymer mixtures according to the invention in a quantity from 0.1 to 1.9% by weight. Such a small quantity results in polymer mixtures having approximately the same mechanical properties as compared with polymer mixtures according to EP—A—0 046 040 which comprise, for example, 25% by weight of a copolymer with 10 mol% of maleic acid anhydride.

The polymer mixture according to the invention is characterized in that the polymer mixture comprises 5—95% by weight of polyphenylene ether, 95—5% by weight of polyamide, 0.1—1.9% by weight of the copolymer with units of a vinyl aromatic compound and of an unsaturated dicarboxylic acid, unsaturated dicarboxylic acid anhydride, unsaturated dicarboxylic acid amide or unsaturated dicarboxylic acid imide and 0—40% by weight of one or more compounds for improving the impact strength, the copolymer comprising 41—50 mol% of units derived from an unsaturated dicarboxylic acid, unsaturated dicarboxylic acid anhydride, unsaturated dicarboxylic acid amide or unsaturated dicarboxylic acid imide.

A copolymer comprising units derived from styrene and from maleic acid anhydride is preferably used as a copolymer in the polymer mixture according to the invention. The copolymer preferably comprises 45—50 mol% of units derived from maleic acid anhydride.

The polymer mixtures according to 0 046 040, just as the polymer mixtures according to the invention, may comprise one or more compounds to improve the impact strength. The polymer mixtures according to the invention may comprise any impact strength improving compound suitable for polyphenylene ethers or for polyamides. The polymer mixtures according to the invention preferably comprise butadiene styrene block copolymers, for example, a hydrogenated butadiene-styrene block copolymer.

The polymer mixtures according to the invention comprise a polyphenylene ether, a polyamide and a copolymer of a vinyl aromatic compound and an unsaturated dicarboxylic acid or a functional derivative thereof.

Polyphenylene ethers are compounds known *per se*. For this purpose, reference may be made to the US—A—3 306 874; US—A— 3 306 875; US—A—3 257 357 and US—A—3 257 358. Polyphenylene ethers are usually prepared by an oxidative coupling reaction — in the presence of a copper amine complex — of one or more bi- or trivalent substituted phenols, homopolymers and copolymers, respectively, being obtained. Copper amine complexes derived from primary, secondary and/or tertiary amines may be used.

Examples of suitable polyphenylene ethers are:

poly(2,3-dimethyl-6-ethylphenylene-1,4-ether)

poly(2,3,6-trimethylphenylene-1,4-ether)

poly(2,4'-methylphenylphenylene-1,4-ether)

poly(2-bromo-6-phenylphenylene-1,4-ether)

poly(2-methyl-6-phenylphenylene-1,4-ether)

poly(2-phenylphenylene-1,4-ether)

poly(2-chlorophenylene-1,4-ether)

poly(2-methylphenylene-1,4-ether)

poly(2-chloro-6-ethylphenylene-1,4-ether)

poly(2-chloro-6-bromophenylene-1,4-ether)

2

poly(2,6-di-n-propylphenylene-1,4-ether)
poly(2-methyl-6-isopropylphenylene-1,4-ether)
poly(2-chloro-6-methylphenylene-1,4-ether)
poly(2-methyl-6-ethylphenylene-1,4-ether)
poly(2,6-dibromophenylene-1,4-ether)
poly(2,6-dichlorophenylene-1,4-ether)
poly(2,6-diethylphenylene-1,4-ether)
poly(2,6-dimethylphenylene-1,4-ether)

Copolymers, for example, copolymers derived from two or more phenols as used in the preparation of the homopolymers mentioned hereinbefore, are also suitable. Furthermore, homopolymeric and copolymeric polyphenylene ethers on which a vinyl aromatic compound, for example styrene, is grafted are also suitable.

The polymer mixtures according to the invention comprise a polyamide. All the known thermoplastic polyamides may be used in the polymer mixtures according to the invention. Suitable polyamides are, for example, polyamide-4, polyamide-6, polyamide-4,6, polyamide-6,6, polyamide-3,4, polyamide-12, polyamide-11, polyamide-6,10, polyamides prepared from terephthalic acid and 4,4'-diaminodicyclohexyl methane, polyamides prepared from azelaic acid, adipic acid and 2,2-bis-(-aminocyclohexyl) propane, polyamides prepared from adipic acid and metaxylylene-diamine, polyamides from terephtalic acid and trimethylhexamethylene diamine.

As the third essential component the polymer mixture according to the invention comprises 0.1—1.9% by weight of a copolymer of a vinyl aromatic compound and of an unsaturated dicarboxylic acid or of an unsaturated dicarboxylic acid anhydride or of an unsaturated dicarboxylic acid amide or of an unsaturated dicarboxylic acid imide. The copolymer comprises 41—50 mol%, preferably 45—50 mol% of units derived from the dicarboxylic acid or from the above-mentioned derivative thereof. Copolymers having a content of maleic acid or maleic acid derivative of less than 41 mol% must be used in a larger quantity than the copolymers as used in polymer mixtures according to the invention in order to obtain the same mechanical properties. However, this large quantity leads to a decrease of the resistance to elevated temperatures. The copolymer as used in the polymer mixtures according to the invention comprises units of a vinyl aromatic compound. Suitable vinyl aromatic compounds are styrene, alphamethylstyrene, alpha- or beta-halogenated styrene compounds, vinyl aromatic compounds substituted at the aromatic nucleus with alkyl groups and/or halogen atoms, for example p-methylstyrene, o-methylstyrene, tert.butylstyrene, ethyl vinyltoluene, p-chlorostyrene or mixtures thereof. The copolymer also comprises units derived from an unsaturated dicarboxylic acid, unsaturated dicarboxylic acid anhydride, unsaturated dicarboxylic acid amide, or unsaturated dicarboxylic acid imide. Examples of suitable compounds are maleic acid anhydride, maleic acid, N-alkyl maleimides, N-arylmaleimides, fumaric acid, N-alkyl maleic acid amides, chloromaleic acid anhydride, N-aryl maleic acid amides, maleic acid hydrazide or mixtures thereof. The copolymers may comprise in a small quantity — for example, up to 20 mol% — units of further copolymerisable compounds. Examples of such compounds are unsaturated carboxylic acids, for example, (meth)acrylic acid, butenic acid, crotonic acid, pentenic acid or the esters of the said acids, unsaturated alcohols, for example, allyl alcohol, crotyl alcohol, methyl vinyl carbinol, allyl carbinol, unsaturated amines corresponding to the just-mentioned alcohols in which the OH-group is replaced by an $NH_2$-group, or vinyl cyanides, for example, acrylonitrile.

The rubber-modified products of the above-mentioned copolymers of a vinyl aromatic compound and an unsaturated dicarboxylic acid or derivative thereof are also suitable.

In addition to the above-mentioned constituents, the polymer mixtures according to the invention may comprise one or more impact strength-improving agents. Suitable agents to improve the impact strength are, for example, impact-proof polystyrene (high impact polystyrene), poly-budadiene, ethylene propylene-diene rubbers, hydrogenated or non-hydrogenated thermoplastic rubbers. Any agent which is usual for polyphenylene ethers and/or polyamides in themselves are to be considered. These agents are normally used in a quantity of not more than 40% by weight, preferably not more than 20% by weight.

Particularly suitable agents to improve the impact strength of the polymer mixtures according to the invention are the so-called block copolymers with blocks derived from a diene, for example, polybutadiene blocks, and with blocks derived from a vinyl aromatic compound, for example, polystyrene blocks. These block copolymers may be of different types, for example, of the AB, ABA, A(B)$_4$ type. These block copolymers may be hydrogenated.

In addition to the above-mentioned constituents, the polymer mixture according to the invention may comprise any usual additive, for example, organic and inorganic stabilisers, flame-retarding agents, fillers, reinforcing fillers, dyes and pigments, additives to make the polymer mixtures antistatic or conductive, etc.

The invention will be described in greater detail with reference to the following specific examples.

Example I and comparative examples A, B, C and D

Five polymer mixtures were prepared of which one (example I) according to the invention and four for comparison (examples A, B, C and D). All five polymer mixtures were prepared starting from fifty parts by weight of poly(2,6-dimethylphenylene-1,4-ether) having an intrinsic viscosity of 50 ml/g measured at 25°C in chloroform and from fifty parts by weight of polyamide-6,6 having a number average molecular weight,

3

**0 147 874**

Mn of 20,000 and a viscosity index measured according to ISO R 307 (0.5 g of polyamide dissolved in 90% formic acid at 25°C) of 135 ml/g. The moisture content of the polyamide is approximately 0.3%.

The constituents were mixed in a Werner-Pfleiderer double-blade extruder at a speed of 200 r.p.m., temperature adjusted at 280°C.

In comparative experiment A the polyphenylene ethers and the polyamide were mixed in the extruder without further compounds; the extrudate was formed into test rods by injection moulding according to ASTM D 638 for measuring the tensile strength and the elongation upon fracture. Test rods were also moulded according to ASTM D 256 for measuring the impact strength according to Izod. The thermal deformation temperature, HDT — according to ASTM D 648 — and the Vicat B value — according to ASTM D 1525 were also determined. The properties were determined right after injection moulding.

In the comparative examples B, C and D a commercially available product, namely Dylark® 250, was used as the compound for improving the properties. Dylark® 250 is a rubber-modified styrene-maleic acid anhydride copolymer; it comprises approximately 15% by weight of rubber; the copolymer comprises approximately 10 mol% of maleic acid anhydride. The examples B, C and D each comprise a different quantity of Dylark® 250, namely 1 part by weight, 5 parts by weight and 25 parts by weight. Dylark 250 is a product which was used in the examples of EP—A—0 046 040 in a quantity from 15 to 25% by weight (examples 11—13). In example I according to the invention, 1 part by weight of a styrene maleic acid anhydride copolymer, with approximately 50 mol% maleic acid anhydride, is used.

Test rods were made from all polymer mixtures and the properties were determined in the manner described above with reference to example A. The results obtained are recorded in Table A below.

TABLE A

| Example | I | A* | B* | C* | D* |
|---|---|---|---|---|---|
| Composition (parts by weight) | | | | | |
| polyphenylene ether | 50 | 50 | 50 | 50 | 50 |
| nylon-6,6 | 50 | 50 | 50 | 50 | 50 |
| styrene-maleic acid anhydride copolymer (50 mol% MA) | 1 | — | — | — | — |
| Dylark 250 (10 mol% MA) | — | — | 1 | 5 | 25 |

TABLE B

| Example | I | A* | B* | C* | D* |
|---|---|---|---|---|---|
| Mechanical properties | | | | | |
| Tensile strength upon fracture (N/mm$^2$) drawing speed: 5 mm/min. | 66 | 49 | 54 | 52 | 60 |
| Elongation upon fracture (%) drawing speed: 5 mm/min. | 5.5 | 3.5 | 4.5 | 4.5 | 5.5 |
| Impact strength Izod (Nm/m) at 20°C with notch | 34 | 16 | 16.5 | 9.5 | 14.5 |
| HDT (°C) at 1.82 MPa; supported length 100 mm. | 147 | 151 | 117 | 121 | 122 |
| Vicat B (°C) at 120°C/h, 50 N | 207 | 212 | 209 | 205 | 183 |

*control

It may be seen from the results of the above Table B that the polymer mixture according to the invention (Example I) with a small quantity of copolymer (1 part by weight) has approximately the same mechanical properties as polymer mixture D which comprises 25 parts by weight of a prior art copolymer. The Vicat B-value and the HDT-value of example I, however, is higher than that of example D.

4

## Claims

1. A polymer mixture comprising a polyphenylene ether, a polyamide and a copolymer with units of a vinyl aromatic compound and of an unsaturated dicarboxylic acid, characterized in that the polymer mixture comprises 5—95% by weight of polyphenylene ether, 95—5% by weight of polyamide, 0.1—1.9% by weight of the copolymer with units of a vinyl aromatic compound and of an unsaturated dicarboxylic acid, unsaturated dicarboxylic acid anhydride, unsaturated dicarboxylic acid amide or unsaturated dicarboxylic acid imide and 0—40% by weight of one or more compounds for improving the impact strength, the copolymer comprising 41—50 mol% of units derived from an unsaturated dicarboxylic acid, unsaturated dicarboxylic acid anhydride, unsaturated dicarboxylic acid amide or unsaturated dicarboxylic acid imide.

2. A polymer mixture as claimed in Claim 1, characterized in that the copolymer comprises units derived from styrene and from maleic acid anhydride and the copolymer comprises 45—50 mol% of units derived from maleic acid anhydride.

## Patentansprüche

1. Polymerisatmischung umfassend einen Polyphenylenäther, ein Polyamid und ein Copolymerisat mit Einheiten einer vinylaromatischen Verbindung und einer ungesättigten Dicarbonsäure, dadurch gekennzeichnet, daß die Polymerisatmischung umfaßt 5 bis 95 Gew.-% eines Polyphenylenäthers, 95 bis 5 Gew.-% Polyamid, 0,1 bis 1,9 Gew.-% des Copolymerisats mit Einheiten einer vinylaromatischen Verbindung und einer ungesättigten Dicarbonsäure, ungesättigtem Dicarbonsäureanhydrid, ungesättigtem Dicarbonsäureamid oder ungesättigtem Dicarbonsäureimid und 0 bis 40 Gew.-% einer oder mehrerer Verbindungen zur Verbesserung der Schlagfestigkeit, wobei das Copolymerisat 41 bis 50 Mol-% von Einheiten, die abgeleitet sind von ungesättigter Dicarbonsäure, ungesättigtem Dicarbonsäureanhydrid, ungesättigtem Dicarbonsäureamid und ungesättigtem Dicarbonsäureimid, enthält.

2. Polymerisatmischung nach Anspruch 1, dadurch gekennzeichnet, daß das Copolymerisat Einheiten abgeleitet von Styrol und Maleinsäureanhydrid aufweist und 45 bis 50 Mol-% von Einheiten abgeleitet von Maleinsäureanhydrid umfaßt.

## Revendications

1. Mélange de polymères comprenant un polyoxyphénylène, un polyamide et un copolymère avec des motifs dérivés d'un composé aromatique vinylique et d'un acide dicarboxylique insaturé, caractérisé en ce que le mélange de polymères comprend de 5 à 95% en poids d'un polyoxyphénylène, de 95 à 5% d'un polyamide, de 0,1 à 1,9% en poids du copolymère comprenant des motifs dérivés d'un composé aromatique vinylique et d'un acide dicarboxylique insaturé, d'un anhydride d'acide dicarboxylique insaturé, d'un amide d'acide dicarboxylique insaturé ou d'un imide d'acide dicarboxylique insaturé, et de 0 à 40% en poids d'au moins un composé destiné à améliorer la résistance aux chocs, le copolymère comprenant de 41 à 50% en moles de motifs dérivés d'un acide dicarboxylique insaturé, d'un anhydride d'acide dicarboxylique insaturé d'un imide d'acide dicarboxylique insaturé ou d'un imide d'acide dicarboxylique insaturé.

2. Mélange de polymères suivant la revendication 1, caractérisé en ce que le copolymère comprend des motifs dérivés du styrène et de l'anhydride de l'acide maléique et en ce que le copolymère comprend de 45 à 50% en moles de motifs dérivés de l'anhydride de l'acide maléique.

5